# EUROPEAN PATENT SPECIFICATION

(11) **EP 3 812 724 B1**
(45) Date of publication and mention of the grant of the patent: **01.03.2023**
(21) Application number: 20203346.0
(22) Date of filing: 22.10.2020
(51) Int. Cl.: H02K 5/10, H02K 5/22, H02K 7/00, H02K 11/225, H02K 11/25, G01K 1/14, G01D 11/30

(54) **SENSOR MODULE FOR MOUNTING IN A MOTOR**
SENSORMODUL ZUR MONTAGE IN EINEM MOTOR
MODULE DE CAPTEUR POUR MONTAGE DANS UN MOTEUR

(30) Priority: 24.10.2019 IN 201941043195
(43) Date of publication of application: 28.04.2021
(73) Proprietor: TE Connectivity Germany GmbH, 64625 Bensheim (DE); TE Connectivity Belgium BVBA, 8020 Oostkamp (BE); TE Connectivity India Private Limited, 560048 Karnataka (IN)
(72) Inventor: WIECHERT, Sebastian, 67346 Speyer (DE); RAVINTHIRAN, Manivasakan, 623707 Karnataka (IN); EMBO, Bram, 8020 Oostkamp (BE); POOVENTHAN, A, 635811 Tamil Nadu (IN); SHIVAPRASAD, B, 577501 Karnataka (IN); VANKEIRSBILCK, Ignace, 8020 Oostkamp (BE); SINGH, Kiranpal, 560037 Karnataka (IN); MANJUNATHA, D V, 577541 Karnataka (IN)
(74) Representative: Grünecker Patent- und Rechtsanwälte PartG mbB

(56) References cited:
- CN-U- 204 442 103
- CN-U- 208 638 164
- DE-A1-102010 046 520
- US-A1- 2017 033 637

## Description

### BACKGROUND OF THE INVENTION

The invention relates to a sensor module for mounting in a motor.

### SUMMARY OF THE INVENTION

Ideally, a motor, such as an electric motor, should operate to its maximum designed life. Any defects of the motor may lead to a shutdown. Therefore, sensors are utilized for analysing and predicting the health of motors. However, motors should preferably be compact and light, particularly motors which are mounted in vehicles to reduce the amount of energy needed to move the vehicle. The limited space in the motor, however, makes it extremely difficult to install the sensors in the motor, as the handling of the sensors within the motor chamber is impaired.

DE 10 2010 046520 A1, US 2017/033637 A1, CN 204 442 103 U and CN 208 638 164 U show motors with various configurations of sensors.

It is the object of the invention to facilitate the mounting of sensors in a motor.

The invention solves the above-mentioned problem by providing a sensor module for mounting in a motor, the sensor module comprising a holder adapted to be mounted in a wet chamber of the motor and a temperature sensor adapted to be mounted in a dry chamber of the motor. The sensor module also comprises a plurality of signal lines and a connector interface adapted to be plugged into a corresponding connector.

A rotational position sensor is mounted on the holder and the temperature sensor is spaced apart from the holder, whereby the rotational position sensor and the temperature sensor are connected via the plurality of signal lines to the connector interface. The sensor module further comprises a sealing element arranged between the rotational position sensor and the temperature sensor, the sealing element being penetrated by signal lines from one of the rotational position sensor and the temperature sensor.

With the inventive solution, the sensor module may partly be mounted in the wet chamber of the motor and partly be installed in the dry chamber of the motor, allowing a user to make the best out of the limited space in the motor. The installation of the sensor module is no longer limited to the wet chamber or the dry chamber, increasing the space for the installation and thus manageability of the sensor module within the motor. Furthermore, the rotational position sensor and the temperature sensor are integrated in a single sensor module reducing the error margin during installation. The user does not have to procure the temperature sensor and rotational position sensor separately and then integrate them during the production line in the confined space of the motor after mounting.

The invention can be further improved by the following features, which are independent from one another with respect to their respective technical effects and which can be combined arbitrarily.

For example, according to a first embodiment, the rotational position sensor may be a contactless sensor such as a resolver. Unlike encoders, resolvers have no electronic components such as circuit boards or the like. Therefore, resolvers are robust against soiling, vibrations and work safely within a wide temperature range, which makes them highly reliable. Especially in motors the rotational position sensor is subjected to harsh environments; using a resolver as rotational position sensor may thus increase the reliability and life expectancy of the sensor.

The holder may particularly be disc-like having an outer circumference and an inner circumference. The rotational position sensor may be at least partially mounted around the inner circumference of the disc-like holder. If the rotational position sensor is a resolver, the stator may be fixedly mounted around the inner circumference of the disc-like holder. By providing a disk-like holder, the sensor module or at least the holder and the rotational position sensor may be particularly compact, further facilitating the mounting in the motor.

The rotational position sensor may protrude beyond two opposing face sides from the disk-like holder. One face side may be directed towards the wet chamber of the motor and the other face side may be directed towards the dry chamber of the motor.

The sealing element may extend from the one face side to the other face side of the holder forming a sealed passage between the wet chamber and the dry chamber when the sensor module is mounted in the motor. The sealing element may be arranged adjacent to the holder. Alternatively, the sealing element may at least partially encase a section of the holder or penetrate through the holder.

Preferably, the connector interface is adapted to be arranged in the dry chamber of the motor. Therefore, the sealing element may be penetrated by the signal lines of the rotational position sensor for sealingly leading the signal lines of the rotational position sensor from the wet chamber to the connector interface in the dry chamber.

However, in the case that the connector interface should be arranged in the wet chamber of the motor, the sealing element may be penetrated by the signal lines of the temperature sensor sealingly leading the signal lines of the temperature sensor from the dry chamber to the connector interface in the wet chamber.

At least one of the two face sides of the holder may be adapted to be arranged and/or face the wet chamber of the motor. The terminals of the rotational position sensor may be arranged on said face side and may be potted for sealing the connection between the terminals of the rotational position sensor and the signal lines.

The rotational position sensor may comprise a sealing cover at least on the side adapted to face the wet chamber. The sealing cover may be potted to the rotational position sensor and may include the potting of the rotational position sensor's terminals. The sealing cover may extend around an edge of the holder, leading the signal lines connected to the terminals to a further sealing element sealingly receiving said signal lines. Thus, the sealing element may be formed by two sealing elements, the sealing cover and the sealing element each arranged at opposite face sides of the holder.

The sealing element may be a potted sleeve, particularly a rubber sleeve, which is penetrated by the signal lines of one of the rotational position sensor or the temperature sensor. The sealing element may further comprise a flange extending radially from a body of the sealing element. The flange may engage a frame of a passage formed between the wet chamber and the dry chamber of the motor, therefore securing the position of the sealing element within the chamber and sealing the passage.

The potting of the sealing element may offer a securing function in addition to the sealing function. The signal lines penetrating the sealing element may be kept in place by the potting. Consequently, relative movement of the signal lines and the sealing element can be prevented, which may cause a disconnection of the signal lines with their corresponding terminals.

According to a further advantageous embodiment, the sensor module may further comprise a holding bracket for holding the temperature sensor. The holding bracket may further comprise a connector holder for removably fixing the connector interface to the connector holder. Therefore, the connector interface can be secured on the connector holder during installation, reducing the risk of strain and/or tear of the signal lines during the installation.

The connector interface may be fixed to the connector holder in a testing position, for example for end of line testing. The user can easily connect the testing equipment to the connector interface after mounting the sensor module, irrespective of the position of the complementary connector for the application. Preferably, the connector interface may be fixed to the connector holder from a manufacturing side and after mounting and testing the sensor module in the motor the user may detach the connector holder from the connector holder and move it to a desired position.

The rotational position sensor and the temperature sensor may particularly be connected to the same connector interface via the plurality of signal lines. Consequently, the rotational position sensor and temperature sensor may be tested simultaneously and only one complementary connector is necessary in the application, further reducing the amount of different components in the motor.

At least in the testing position the plurality of signal lines connecting the rotational position sensor and temperature sensor to the connector interface may be at least partially wound around the holding bracket. Thus, the signal lines are neatly arranged in the sensor module and do not interfere during mounting.

The holding bracket may comprise a pillar with a free end on which the connector holder is arranged. The signal lines may be at least partially wound around the pillar at least in the testing position. For positioning the plurality of signal lines around the holding bracket, the holding bracket may comprise a positioning rib protruding from an outer surface of the holding bracket, particularly the pillar.

The connector interface may be detached from the connector holder, particularly the holding bracket, in an application position, in which the connector interface is mated with a complementary connector arranged in the motor. Preferably the connector interface may be mounted in a connector holder, which is spaced apart from the holding bracket in the application position.

When the connector interface is detached from the connector holder, the wound portion of the signal lines may be at least partially unwound, increasing the leeway for positioning the connector interface. This may further facilitate the mounting of the sensor module. Additionally, the added leeway results in the sensor module being applicable for various motors having different structures and/or different predetermined positions for the complementary connector.

The holding bracket may comprise a through-hole, whereby the temperature sensor extends through the through-hole. The through-hole may extend essentially parallel to a longitudinal axis and the temperature sensor may comprise a sensor body extending essentially parallel to the longitudinal axis. The holding bracket may be adapted to guide the temperature sensor along the through-hole, facilitating the insertion of the temperature sensor into a predetermined sensing position in the motor.

The temperature sensor or at least a tip carrying the sensing elements of the temperature sensor may be adapted to be inserted into a hole, particularly a blind hole, which may be formed in coil windings of the motor. The temperature sensor is encircled by the coil windings improving the sensing accuracy of the temperature sensor.

The temperature sensor or at least the tip may preferably be rotationally symmetrical, so that the insertion of the temperature sensor or at least the tip into the hole, particularly the blind hole may be facilitated. The relative rotational position of the temperature sensor and the hole is consequently irrelevant for the insertion of the temperature sensor into the hole, particularly the blind hole.

However, if an arrangement of the temperature sensor in a predetermined rotational position relative to the hole, particularly the blind hole, is desired, the temperature sensor and/or the hole, particularly the blind hole, may comprise at least one coding feature. The temperature sensor may for example comprise a rotationally asymmetrical shape complementary to the hole, particularly the blind hole.

The temperature sensor may preferably be a negative temperature coefficient thermistor sensor, also referred to as NTC-sensor. Such sensors are characterized by their quick response time and high accuracy.

The temperature sensor, in particular the tip of the temperature sensor comprising the sensing element, may be encapsulated for example in an epoxy resin. The encapsulation may protect the sensing elements from the surrounding environment and prevent damage due to shock and/or vibrations. Preferably, at least the tip of the temperature sensor may be encapsulated in a fluoropolymer such as polytetrafluoroethylene (PTFA) and perfluoroalkoxy polymer (PFA). Fluoropolymers comprise a high resistance to solvents, acids and bases. Hence, encapsulating at least the tip of the temperature sensor in a fluoropolymer may increase the life cycle of the temperature sensor, particularly in harsh environments.

Depending on the application requirements, the shape of the temperature sensor may be adapted correspondingly. Preferably, the tip comprising the sensing element and the remainder of the sensor body may have a cross section in a plane perpendicular to the longitudinal axis which are different from one another in at least one of shape and size. The tip may for example have a circular cross section and the remainder of the sensor body may have a rectangular cross section, wherein the wider side is about as wide as the diameter of the tip's cross section. This may clearly distinguish the tip, which can be inserted into the hole, particularly the blind hole, of the motor's windings, and the remainder of the sensor body.

To limit the insertion depth of the temperature sensor into the hole, particularly the blind hole, of the motor's windings, the temperature sensor may comprise a limit stop projecting radially from the sensor body. The limit stop may prevent the tip of the temperature sensor from being inserted too deep into the windings and abutting an end of the hole potentially damaging the tip.

The temperature sensor may be adapted to move relative to the holding bracket, adjusting the immersion depth of the temperature sensor in the hole, particularly the blind hole, of the motor's windings further increasing the flexibility and tolerance compensation during installation.

The holding bracket may be formed as a monolithic component, for example by an injection moulding process. The holding bracket may comprise a centre stem extending essentially parallel to the longitudinal axis. Further functional parts can project from the circumference of the centre stem. For example, the pillar comprising the connector holder may project from the circumference of the centre stem and may extend essentially parallel to the longitudinal axis beyond the centre stem. Furthermore, a second pillar may project from another side of the circumference and extend essentially parallel to the longitudinal axis beyond the centre stem. The second pillar may feature the through-hole for receiving the temperature sensor. Consequently, the holding features for holding the connector interface and the temperature sensor are locally separated, reducing the risk of entanglement of the signal lines.

According to a further advantageous aspect, a mounting projection may project from the centre stem, the mounting projection being adapted to receive a bush, particularly a ring shaped bush, which can engage a complementary formed mounting feature of the motor, therefore fixing the holding bracket in the motor.

In a further advantageous embodiment, a position assurance member may be provided. The position assurance member may be adapted to be secured in at least two positions on the holding bracket, wherein in a first position of the at least two position between the temperature sensor and the holding bracket is movable and in the second position of the at least two positions the relative position between the temperature sensor and the holding bracket is fixed. Therefore, in the first position the temperature sensor may be mobile to enable height adjustment in the application. In the second position the temperature sensor is fixed at the desired height and is secured against movement due to vibrations and/or shock.

The temperature sensor may be fixed in the through-hole by an interference fit. At least one locking prong may be provided which at least in the second position of the at least two positions is pressed against the outer contour of the temperature sensor. Preferably, multiple locking prongs arranged around a circumference may be provided, wherein in the second position of the at least two positions each locking prong is pressed against the temperature sensor. Thus, the locking prongs hold the temperature sensor in an interference fashion around the circumference of the temperature sensor.

The at least one locking prong may be formed in the through-hole and is elastically deflected by the position assurance member in the second position of the at least two positions. More preferably, however, the at least one locking prong may form a monolithic component with the position assurance member, wherein the at least one locking prong is deflected towards the temperature sensor in the second position of the at least two positions.

The position assurance member may be adapted to guide a movement of the temperature sensor, particularly a movement essentially parallel to the longitudinal axis. The at least one locking prong may abut a radial overhang of the sensor body parallel to the longitudinal axis. The at least one locking prong presses against said overhang while moving from the first position of the at least two position parallel to the longitudinal axis to the second position of the at least two positions. Consequently, the temperature sensor is moved parallel with the position assurance member due to the motion-transmitting coupling in at least one direction. The temperature sensor can thus be guided by the position assurance member into the hole of the motor's windings.

A locking assembly may be provided for locking the position assurance member in at least one of the at least two positions, preferably at least the second position of the at least two positions. The locking assembly may for example be formed by latches, which engage one another in a positive fit. This may prevent the position assurance member from moving positions due to stress, such as vibrations. Consequently, the securement of the temperature sensor by the position assurance member is further improved.

The position assurance member may be secured in more than two positions. For example, the position assurance member may comprise multiple teeth protruding from an outer surface of the position assurance member. Each tooth may correspond to one position of the at least two positions, particularly more than two positions. The position assurance member may be actuated by moving the position assurance member from one position to a subsequent position. In each subsequent position the pressing force with which the temperature sensor is held by an interference fit may be increased.

A motor for a vehicle, in particular an electric motor, comprising a wet chamber, a dry chamber and a passage connecting the wet chamber and the dry chamber may be provided, whereby a sensor module according to any one of the preceding embodiments may be mounted in said motor, the holder being mounted in the wet chamber and the temperature sensor being mounted in the dry chamber, wherein the sealing element is sealingly fixed in the passage.

The connector interface may be arranged in the dry chamber, wherein the signal lines from the rotational position sensor, which is fixed to the holder in the wet chamber, penetrate the sealing element to be sealingly guided through the passage to the dry chamber and connected to the connector interface.

In the figures, the same reference numerals are used for elements, which correspond to one another in terms of their function and/or structure.

According to the description of the various aspects and embodiments, elements shown in the drawings can be omitted if the technical effects of those elements are not needed for a particular application, and *vice versa:* i.e. elements that are not shown or described with reference to the figures but are described above can be added if the technical effect of those particular elements is advantageous in a specific application.

### BRIEF DESCRIPTION OF THE DRAWINGS

The invention will now be described by way of example with reference to the accompanying drawings in which:
- Fig. 1: shows a schematic perspective view of an exemplary embodiment of the sensor module according to the invention
- Fig. 2: shows a schematic perspective view of the exemplary embodiment of the sensor module according to the invention mounted in a motor;
- Fig. 3: shows a schematic perspective view of an exemplary embodiment of a holder and rotational position sensor of a sensor module according to the invention;
- Fig. 4: shows a further schematic perspective view of the rotational position sensor and the holder;
- Fig. 5: shows a schematic perspective view of a holding bracket of the exemplary embodiment of the sensor module according to the invention;
- Fig. 6: shows a schematic cut view of a first exemplary embodiment of a position assurance member in the first position;
- Fig. 7: shows a schematic cut view of the first exemplary embodiment of the position assurance member in the second position;
- Fig. 8: shows a schematic cut view of a second exemplary embodiment of a position assurance member in the first position;
- Fig. 9: shows a schematic cut view of the second exemplary embodiment of the position assurance member in the second position;
- Fig. 10: shows a schematic cut view of third exemplary embodiment of a position assurance member in the first position;
- Fig. 11: shows a schematic cut view of the third exemplary embodiment of the position assurance member in the second position;
- Fig. 12: shows a schematic cut view of a fourth exemplary embodiment of a position assurance member in the first position;
- Fig. 13: shows a schematic cut view of the fourth exemplary embodiment of the position assurance member in the second position.

### DETAILED DESCRIPTION OF THE INVENTION

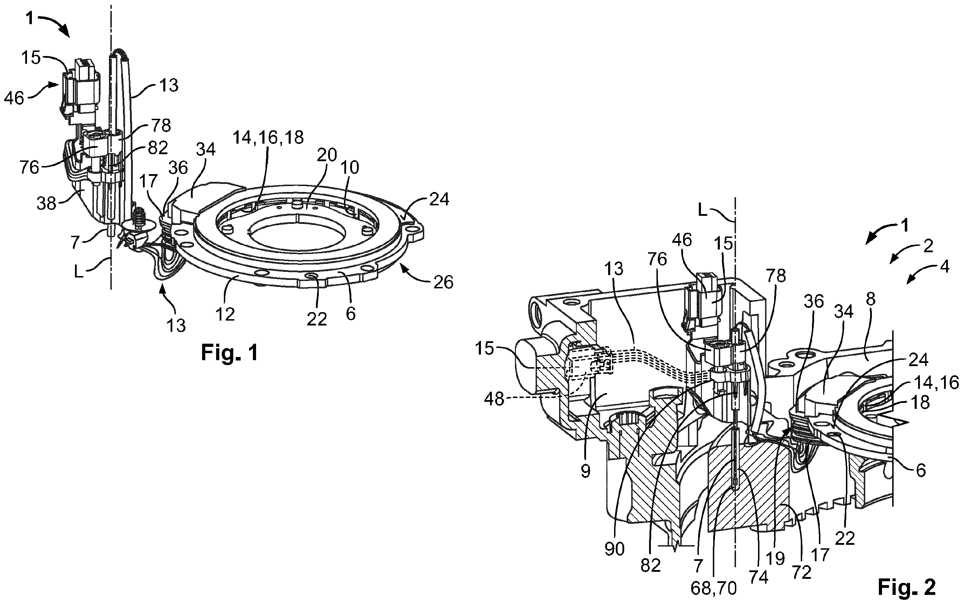

First, an exemplary embodiment of an inventive sensor module 1 is explained in more detail with reference to Fig. 1 and Fig. 2.

Fig. 1 shows the sensor element 1 in a schematic perspective view and in Fig. 2 the sensor module 1 is shown mounted in a motor 2, particularly an electric motor 4.

The sensor module 1 comprises a holder 6 adapted to be mounted in a wet chamber 8 of the motor 2 and a temperature sensor 7 adapted to be mounted in a dry chamber 9 of the motor 2. A rotational position sensor 14 mounted on the holder 6 and the temperature sensor 7 is spaced apart from the holder 6. The rotational position sensor 14 and the temperature sensor 7 are connected via a plurality of signal lines 13 to a connector interface 15, particularly a common connector interface 15. The connector interface 15 is adapted to be connected to a corresponding connector. Furthermore, a sealing element 17 is provided between the temperature sensor 7 and the rotational position sensor 14, which is sealingly penetrated by the signal lines 13 from one of the rotational position sensor 14 and the temperature sensor 7.

In this case the connector interface 15 is arranged in the dry chamber 9 of the motor 2, therefore the sealing element 17 is penetrated by the signal lines 13 from the rotational position sensor 14. The sealing element 17 may be sealingly fixed in a passage 19 of the motor 2 connecting the wet chamber 8 and the dry chamber 9. Therefore, two sensors may be integrated in a single sensor module 1, whereby one sensor may be mounted in the wet chamber 8 and the other sensor may be mounted in the dry chamber 9 of the motor 2. Consequently, the space for mounting the sensor module 1 within the motor 2 is increased, allowing an improved manageability and therefore easier installation of the sensor module 1 in the motor 2.

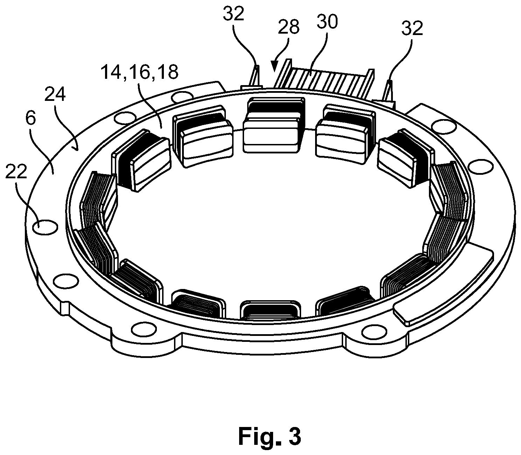

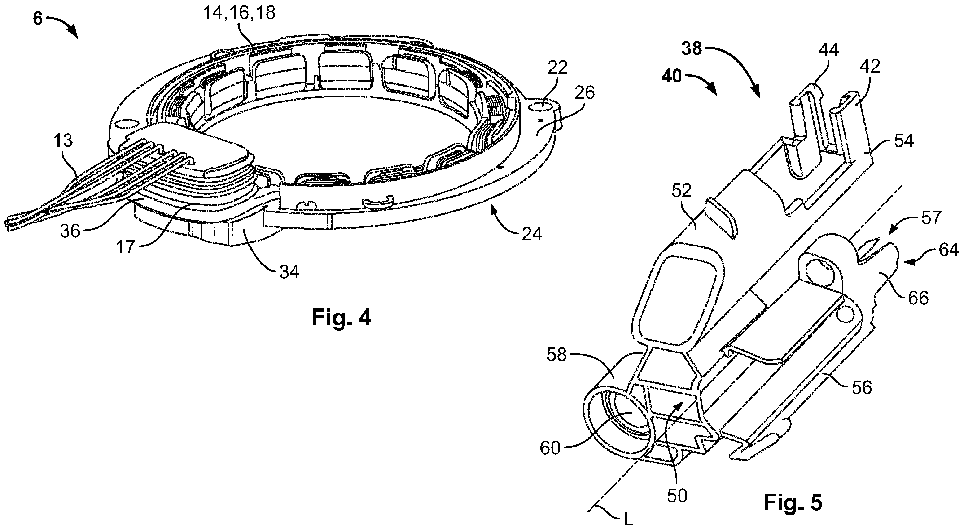

The holder 6, which is now elucidated with reference to Figs. 3 and 4, comprises a disc-like shape, more particularly a ring-like shape, having an inner circumference 10 and an outer circumference 12. Around the inner circumference 10 a rotational position sensor 14 is mounted facing radially inwards.

The rotational position sensor 14 may be a resolver 16, wherein a stator 18 of the resolver 16 is mounted around the inner circumference of the holder 6. The resolver 16 may also comprise a rotor 20, which can be attached to the shaft of the motor 2, whereby the angle is detected by means of an electrical signal generated due to a change in the reactance of the rotating rotor 20 and fixed stator 18. Therefore, the speed of the motor, particularly the rotating speed of the shaft, can be measured and subsequently controlled by sending a signal to the motor.

For securing the holder 6 within the motor 2, the holder 6 is provided with multiple mounting holes 22, which extend from one face side 24 to an opposing face side 26. Therefore, the holder may be fixed with for example bolts in the motor securing the holder 6 and consequently the rotational position sensor 14 against movement due to shock or vibrations.

For a space saving assembly, the holder 6 may comprise a notch 28 along a circumferential section, in which terminals 30 of the rotational position sensor 14, in this case the terminals of the stator 18, may be arranged. The terminals 30 may be connected to signal lines 13, which are connected to the connector interface 15.

In Fig. 3 a face side 24 of the holder 6 is shown. In a mounted state, in which the holder 6 is mounted in the motor 2, said face side 24 faces the wet chamber 8. The rotational position sensor 14 further comprises at least one stabilisation rib 32 protruding from an outer edge of the rotational position sensor 14 into the notch 28. Preferably, a stabilisation rib 32 is provided at either side of the terminals 30. In the wet chamber 9 the rotational position sensor 14 may come into contact with fluids such as oil. To further protect the rotational position sensor, a sealing cover 34 may be provided on the face side 24 of the rotational position sensor 14. The sealing cover 34 may preferably be potted to the rotational position sensor 14 to prevent loosening of the sealing cover 34 due to stress such as shock or vibrations. The sealing cover 34 may preferably embed the terminals 30 and thus protrude into the notch 28. The stabilisation ribs 32 may also be embedded in the potting, whereby the stabilisation ribs 32 further stabilise the potting in the notch 28. The signal lines 13 of the rotational position sensor 14, which may protrude from the sealing cover 34 on the opposite face side 26, penetrate the sealing element 17, which may be arranged at the opposite face side 26. The sealing element 17 may even abut the opposite face side 26 and/or the sealing cover 34, forming a closed sealed path for the signal lines 13 between the sealing cover 34 and the sealing element 17. However, depending on the structure of the motor 26, the sealing element 17 may also be distant from the opposite face side 26 of the holder 6.

The sealing element 17 in this exemplary embodiment is formed as a rubber sleeve comprising a flange portion 36 which radially protrudes from the remainder of the sealing element's body. The flange portion 36 may abut a frame of the passage 19 in the motor 2 securing the sealing element 17 from slipping through the passage 19. The remainder of the sealing element's body may be adapted to extend through the passage 19, sealing said passage between the wet chamber 8 and the dry chamber 9.

The temperature sensor 7 may be held by a holding bracket 38, which is discussed in more detail in reference to Fig. 5.

The holding bracket 38 may preferably be formed as a monolithic component 40, for example as an injection moulded component. The holding bracket 38 may comprise a connector holder 42 for removably receiving the connector interface 15. The connector holder 38 may comprise holding arms 44 facing each other, each holding arm 44 having a guiding notch 46 in which a guiding rail or protrusion of the connector interface 15 can be inserted, fixing the interface to the holding bracket 38. Of course, other means for removably fixing the connector interface 15 to the holding bracket 38 may be envisioned, such as the connector holder 42 having a locking latch, which may engage a locking projection of the connector interface 15.

The connector interface 15 may be fixed to the holding bracket 38 in a testing position 46, which is shown in Fig. 1 and 2. In the testing position 46 the connector interface 15 may easily be connected to testing equipment for end of line testing. The sensor module 1 may preferably be provided in the testing position 48 before mounting, allowing an easier installation of the sensor module 1 as the connector interface 15 is secured on the holding bracket 38 and does not get in the way while handling the sensor module 1. The user can concentrate on holding and positioning the remaining parts of the sensor module 1 without any unnecessary consideration of the connector interface 15.

In a second position, particularly an application position 48, in which the connector interface may be connected to a complementary connector for the application purposes, the connector interface may be detached from the holding bracket 38, particularly the connector holder 38. The connector interface 15 being in the application position 48 is schematically displayed in Fig. 2 with dashed lines.

The holding bracket 38 may comprise a centre stem 50 extending essentially parallel to a longitudinal axis L. Further functional parts can project from the circumference of the centre stem 50. For example, a pillar 52 with a free end 54, on which the connector holder 42 may be formed, may project from the circumference of the centre stem 50 and may extend essentially parallel to the longitudinal axis L beyond the centre stem 50.

Furthermore, a further pillar 56 may project from another side of the circumference and extend essentially parallel to the longitudinal axis L beyond the centre stem 50. The further pillar 56 may feature a through-hole 57 for receiving the temperature sensor 7. Consequently, the holding features for holding the connector interface 15 and the temperature sensor 7 are locally separated, reducing the risk of entanglement of the signal lines 13.

According to a further advantageous aspect, a mounting projection 58 may project from the centre stem 50, the mounting projection 58 being adapted to receive a bush 60, particularly a ring shaped bush, which can engage a complementary formed mounting feature of the motor 2, therefore fixing the holding bracket 38 in the motor 2.

At least in the testing position 46 the signal lines 13 may be at least partially wound around the pillar 52 to neatly arrange the signal lines 13 during installation. Consequently, the signal lines 13 do not interfere by getting in the way, getting stuck and/or getting entangled. For guiding the signal lines 13 around the pillar 52 and preventing shifting of the signal lines 13 along the pillar 52, the pillar 52 may be provided with a protruding rib 62 protruding from an outer surface of the pillar 52.

As can be seen in Fig. 2, the signal lines 13 may be unwound from the pillar 52 in the application position 48. The unwinding of the signal lines 13 provides an increased leeway in positioning the connector interface 15. Consequently, the sensor module 1 may be applicable for various motors being different from one another in at least one of size and structure.

The temperature sensor 7 may be pin shaped comprising a body extending parallel to the longitudinal axis L through the through-hole 57 of the holding bracket 38, particularly the further pillar 56 of the holding bracket 38. The temperature sensor 7 may be inserted in the through-hole 57 through a closing mouth 64 formed by circumferentially arranged, elastically deflectable latches 66, which press against the sensor body, stabilising the temperature sensor 7 in the holding bracket 38. The relative position between the temperature sensor 7 and the holding bracket 38 essentially parallel to the longitudinal axis L may be adjusted, allowing for a tolerance compensation. The temperature sensor 7 may be adapted to be inserted into a hole 68, particularly a blind hole 70 of the motor's winding 72, as is depicted in Fig. 2. Particularly, a tip 74 of the temperature sensor 7 may be adapted to be inserted into the hole 68, particularly the blind hole 70.

At least the tip 74 may comprise a cross-section in a plane essentially perpendicular to the longitudinal axis L, which is corresponding to the cross-section of the hole 68 in the motor's winding 72. Preferably, the cross-section may be rotationally symmetrical, for example circular, so that the insertion of the temperature sensor 7 into the hole 68 is possible regardless of the temperature sensor's relative rotational positon to the hole 68.

The tip 74 may comprise a different cross-section than the remainder of the temperature sensor's body. For example, the tip 74 may comprise a circular cross-section while the remainder of the sensor's body may comprise a quadrangular cross-section, particularly a rectangular cross-section. The width of the wider side of the quadrangular cross-section and the diameter of the circular cross-section may be essentially equal.

The temperature sensor 7 may preferably be a negative temperature coefficient sensor, wherein at least the tip is encapsulated. The encapsulation may comprise a resin, such as an epoxy resin. Epoxy resins have a high thermal conductivity, which allows the sensor elements encapsulated in the epoxy resin to sense the temperature without high losses. Preferably, the encapsulation may be formed by a fluoropolymer such as PTFE and PFE, which may prolong the life cycle of the temperature sensor 7 in harsh environments due to its good resistance to solvents, acids and bases. Furthermore, the high thermal conductivity and thermal diffusivity of fluoropolymers allows for a fast transfer of the heat to the tip of the temperature sensor 7 without high losses.

The temperature sensor 7 may further at least partially be sleeved by a heat shrink sleeve, further protecting the temperature sensor 7. Particularly, the part of the temperature sensor 7 arranged in the holding bracket 38 may be sleeved by the heat shrink sleeve.

At the end opposing the tip 74, the temperature sensor 7 may be connected to signal lines 13, which connect the sensing elements of the temperature sensor 7 to the connector interface 15.

A position assurance member 76 may be provided, which may be securable in at least two positions on the holding bracket 38. In the first position of the at least two positions, the position of the temperature sensor 7, particularly at least one of the rotational position and position essentially parallel to the longitudinal axis L, relative to the holding bracket 38 may be movable. In the second position of the at least two positions, the position of the temperature sensor 7, particularly at least one of the rotational position and position essentially parallel to the longitudinal axis L, relative to the holding bracket 38 may be fixed. Therefore, the position of the temperature sensor 7 may be adjusted in the first position of the at least two positions and subsequently secured in the second position of the at least two positions.

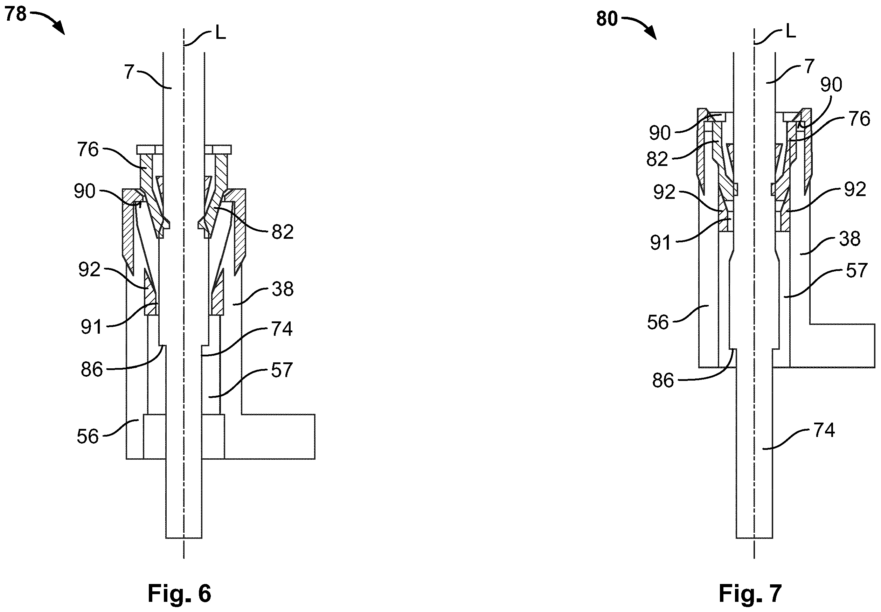

The interaction of the position assurance member 76 and the temperature sensor 7 is further elucidated with reference to Figs. 6 to 13.

A first exemplary embodiment of the position assurance member 76 is shown in Figs. 6 and 7. In Fig. 6 the position assurance member 76 is shown in the first position 78 of the at least two positions and in Fig. 7 the position assurance member 76 is shown in the second position of the at least two positions 80.

In the first embodiment, the position assurance member 76 comprises at least one locking prong 82 nestling to the outer circumference of the temperature sensor 7. Consequently, the temperature sensor 7 is held by the locking prongs 82. A plurality of locking prongs may be arranged around the circumference of the temperature sensor 7. The locking prongs 82 extend into the through-hole 57 forming an opening 84, which is essentially concentric to the through-hole 57. The at least one locking prong 82 comprises circumferentially extending flaps for neatly nestling to the outer contour of the temperature sensor. In the first position, the at least one locking prong 82 press only lightly against the outer contour of the temperature sensor 7, so that the position of the temperature sensor 7 may be adjusted relative to the position assurance member 76 and the holding bracket 38.

In order to limit the movement of the temperature sensor 7 and further fool proofing the sensor module 1, the temperature sensor 7 may comprise a limit stop 86 protruding radially from the temperature sensor's body. The limit stop 86 may be adapted to abut the frame of the hole 68 in the motor's winding. Therefore, the temperature sensor 7 is stopped from a too deep insertion into the hole 68, preventing the tip 74 to hit the bottom of the hole and potentially be damaged. The heat shrink sleeve sleeved at least partially around the temperature sensor 7 may form the limit stop 86.

The limit stop 86 may also provide an abutment surface at an opposite end distanced from the temperature sensor's tip 74. The at least one locking prong 82 may abut the abutment surface in the first position 78 of the at least two positions and push the temperature sensor along when moving the position assurance member 76 from the first position 78 to the second position 80. Therefore, a minimal depth in which the temperature sensor 7 is inserted into the hole 68 may be respected. Furthermore, the temperature sensor 7 may be guided by the position assurance member into the hole 68.

In the second position shown in Fig. 7, the position assurance member 76 may be fully inserted into the through-hole 57, whereby a front end of the position assurance member 76 engages an undercut 90 of the holding bracket 38 locking the position assurance member 76 in the second position 80. The at least one locking prong 82 is inserted into a slot 91 between the temperature sensor 7 and a rigid pressing protrusion 92 formed in the through-hole 57. The pressing protrusion 92 may prevent loosening of the pressing force with which the at least one locking prong 82 is pressed against the temperature sensor. The slot 91 may be dimensioned such that the inserted locking prong 82 is clamped between the pressing protrusion 92 and the temperature sensor 7 and therefore increasing the pressing force of the at least one locking prong 82 to the temperature sensor 7 so that the temperature sensor 7 is secured in the holding bracket 38 by an interference fit.

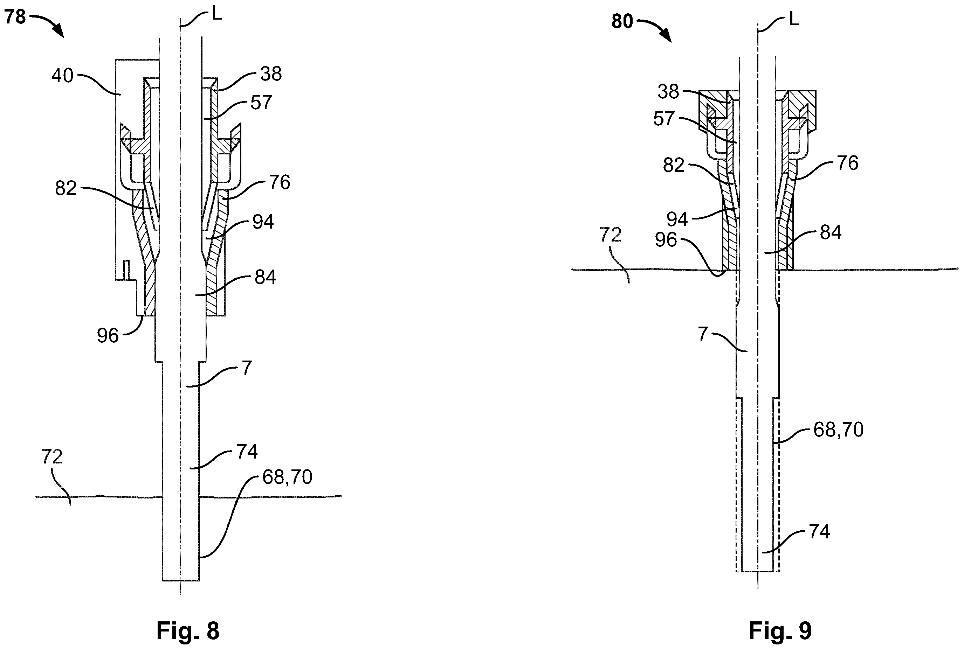

In the second exemplary embodiment (see Figs. 8 and 9), the position assurance member 76 may be arranged on the side of the through-hole 57 directed towards the tip 74 of the temperature sensor 7. The position assurance member 76 is sleeved around the further pillar 56 comprising the through-hole 57, whereby the position assurance member 76 tapers towards the tip 74 and is subsequently sleeved around the temperature sensor 7. The tapering of the position assurance member 76 forms a pocket 94 in the interior of the position assurance member 76, wherein in the second position 80 of the at least two positions the at least one locking prong 82, which is formed integrally in the through-hole 57 of the holding bracket 38, is received in said pocket 94. The locking prong 82 is thus pressed against the temperature sensor 7 fixing it by an interference fit.

A front end 96 of the position assurance member 76 may be adapted to abut a top surface of the motor's winding 72, so that upon further insertion of the temperature sensor 7 into the hole 68 the position assurance member 76 is pushed upward, away from the tip 74 of the temperature sensor 7, into the second position 80 of the at least two positions, as shown in Fig. 9.

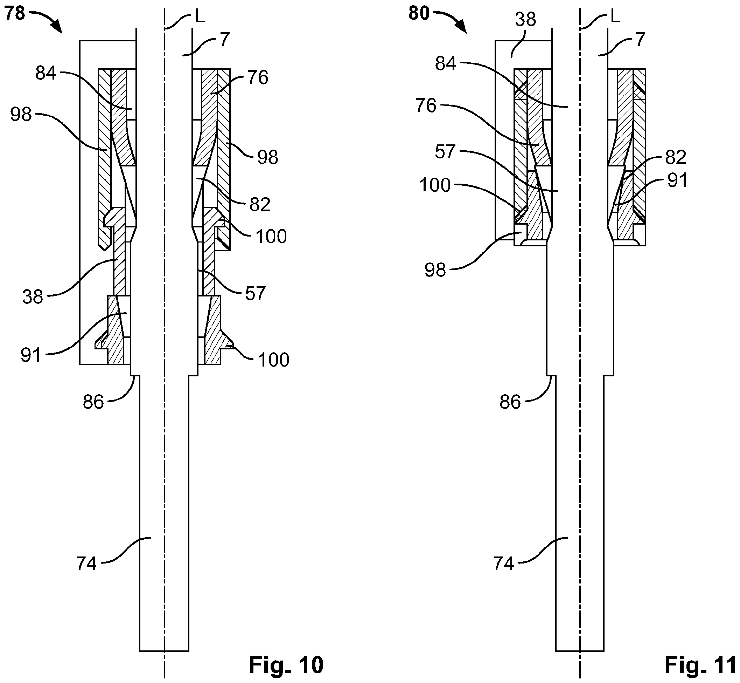

In Figs. 10 and 11 the at least one locking prong 82 abuts the limit stop 86 to simultaneously guide the temperature sensor's tip 74 into the hole 68 while moving the position assurance member 76 from the first to the second position. The position assurance member 76 further comprises locking latches 98, which are engaged to locking ribs 100 formed on an outer surface of the holding bracket 38 in the first and second position, in a positive fitting manner. Consequently, the position assurance member 38 may be securely fixed in the first and second position.

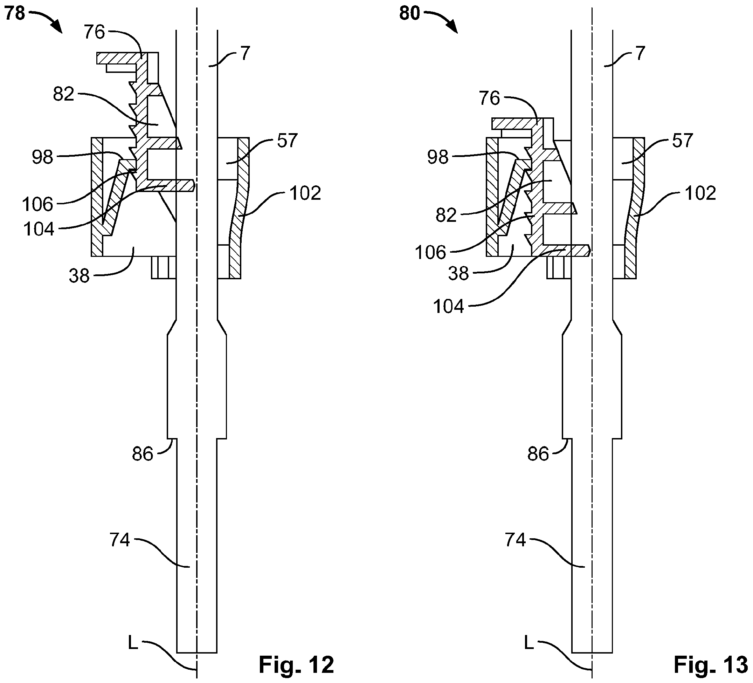

In a further embodiment shown in Figs. 12 and 13, the position assurance member 76 is arranged on one side of the temperature sensor 7 opposing a tapering wall 102 of the holding bracket 38 reducing the width of the through-hole 57. The position assurance member 76 comprises a locking prong 82 formed as a rib that nestles against the outer contour of the temperature sensor 7 parallel to the longitudinal axis L. Furthermore, stabilising clamps are provided, the clamps partly extending around the circumference of the temperature sensor 7, so as to hold the temperature sensor 7. On the side facing away from the temperature sensor 7, the position assurance member 76 comprises multiple protruding teeth 106, which may engage a locking latch 98 in a positive fit blocking a movement of the position assurance member 76 relative to the holding bracket 38 away from the tip 74 of the temperature sensor 7.

Each tooth 106 corresponds to a position, at which the position assurance member 76 may be secured. At the first position 78 the temperature sensor 7 may be moved, allowing for an adjustment of the temperature sensor's position. With each incrementing position, the distance between the locking prong 82 and the tapering wall 102 decreases, leading to an increasing pressing force of the locking prong 82 to the temperature sensor 7. Consequently, the pressing force can be adapted depending on the application requirements.

### REFERENCE NUMERALS

- 1: sensor module
- 2: motor
- 4: electric motor
- 6: holder
- 7: temperature sensor
- 8: wet chamber
- 9: dry chamber
- 10: inner circumference
- 12: outer circumference
- 13: signal lines
- 14: rotational position sensor
- 15: connector interface
- 16: resolver
- 17: sealing element
- 18: stator
- 19: passage
- 20: rotor
- 22: mounting hole
- 24: face side
- 26: opposing face side
- 28: notch
- 30: terminal
- 32: stabilisation rib
- 34: sealing cover
- 36: flange portion
- 38: holding bracket
- 40: monolithic component
- 42: connector holder
- 44: holding arms
- 46: testing position
- 48: application position
- 50: centre stem
- 52: pillar
- 54: free end
- 56: further pillar
- 57: through-hole
- 58: mounting projection
- 60: bush
- 62: protruding rib
- 64: closing mouth
- 66: latch
- 68: hole
- 70: blind hole
- 72: motor's winding
- 74: tip
- 76: position assurance member
- 78: first position
- 80: second position
- 82: locking prong
- 84: opening
- 86: limit stop
- 90: undercut
- 91: slot
- 92: pressing protrusion
- 94: pocket
- 96: front end
- 98: locking latches
- 100: locking rib
- 102: tapering wall
- 104: holding rib
- 106: tooth

- L: longitudinal axis

## Claims

1. Sensor module (1) for mounting in a motor (2), the sensor module (1) comprising a holder (6) adapted to be mounted in a wet chamber (8) of the motor (2) and a temperature sensor (7) adapted to be mounted in a dry chamber (9) of the motor (2), a rotational position sensor (14) being mounted on the holder (6) and the temperature sensor (7) being spaced apart from the holder (6), the sensor module further comprising a plurality of signal lines (13) and a connector interface (15) adapted to be plugged into a corresponding connector, wherein the rotational position sensor (14) and the temperature sensor (7) are connected via the plurality of signal lines (13) to the connector interface (15), and wherein the sensor module (1) further comprises a sealing element (17) arranged between the rotational position sensor (14) and the temperature sensor (7) and being sealingly penetrated by signal lines (13) from one of the rotational position sensor (14) and the temperature sensor (7).

2. Sensor module (1) according to claim 1, wherein the sealing element (17) extends from one face side (24) to an opposing face side (26) of the holder (6).

3. Sensor module (1) according to claim 1, wherein the rotational position sensor (14) comprises a sealing cover (34), the sealing cover (34) closing the sealing element (17) from at least one side.

4. Sensor module (1) according to claim 1, wherein the sensor module (1) further comprises a holding bracket (38) for holding the temperature sensor (7) and wherein the holding bracket (38) comprises a connector holder (42) for removably fixing the connector interface (15) to the holding bracket (38) in a testing position (46).

5. Sensor module (1) according to claim 4, wherein at least in the testing position (46) the plurality of signal lines (13) connecting the rotational position sensor (14) and/or the temperature sensor (7) to the connector interface (15) are at least partially wound around the holding bracket (38).

6. Sensor module (1) according to claim 4, wherein in an application position (48) for connecting the connector interface (15) to a complementary connector for customer application, the connector interface (15) is spaced apart from the holding bracket (38).

7. Sensor module (1) according to claim 4, wherein the holding bracket (38) comprises a through-hole (57) and the temperature sensor (7) extends through the through-hole (57).

8. Sensor module (1) according to claim 1, wherein the temperature sensor (7) comprises at least one limit stop (86) projecting radially from the temperature sensor's (7) body for limiting an insertion depth of the temperature sensor (7).

9. Sensor module (1) according to claim 1, wherein at least a tip (74) of the temperature sensor (7) comprises an essentially rotationally symmetrical cross-section.

10. Sensor module (1) according to claim 9, wherein the tip (74) of the temperature sensor (7) and the remainder of the temperature sensor (7) comprise crosssections, which are different from one another in at least one of size and shape.

11. Sensor module (1) according to claim 10, wherein a position assurance member (76) is adapted to be secured in at least two positions on the holding bracket (48) and wherein in a first position (78) of the at least two positions the relative position between the temperature sensor (7) and the holding bracket (38) is movable and in the second position (80) of the at least two positions the relative position between the temperature sensor (7) and the holding bracket (38) is fixed.

12. Sensor module (1) according to claim 11, wherein at least in the second position (80) of the at least two positions at least one locking prong (82) is pressed against the temperature sensor (7).

13. Sensor module (1) according to claim 12, wherein the at least one locking prong (82) and the position assurance member (76) are formed integrally with one another as a monolithic component.

14. Sensor module (1) according to claim 12, wherein the position assurance member (76) is adapted to guide the temperature sensor (7) parallel to the movement from the first position (78) of the at least two positions to the other positions of the at least two positions.

15. Motor (2) comprising a wet chamber (8), a dry chamber (9) and a passage (19) connecting the wet chamber (8) and the dry chamber (9), wherein a sensor module (1) according to any one of claims 1 to 14 is mounted in the motor (2), the rotational position sensor (14) being mounted in the wet chamber (8) and the temperature sensor (7) being mounted in the dry chamber (9) and wherein the sealing element (17) is sealingly fixed in the passage (19).

## Patentansprüche

1. Sensor-Modul (1) zum Installieren in einem Motor (2), wobei das Sensor-Modul (1) einen Halter (6), der zum Installieren in einer Nasskammer (8) des Motors (2) eingerichtet ist, sowie einen Temperatur-Sensor (7) umfasst, der zum Installieren in einer Trockenkammer (9) des Motors (2) eingerichtet ist, wobei ein Drehpositions-Sensor (14) an dem Halter (6) und dem Temperatur-Sensor (7) installiert und von dem Halter (6) beabstandet ist, das Sensor-Modul des Weiteren eine Vielzahl von Signalleitungen (13) sowie eine Verbinder-Schnittstelle (15) umfasst, die zum Einstecken in einen entsprechenden Verbinder eingerichtet ist, der Drehpositions-Sensor (14) und der Temperatur-Sensor (7) über die Vielzahl von Signalleitungen (13) mit der Verbinder-Schnittstelle (15) verbunden sind, und das Sensor-Modul (1) des Weiteren ein Dichtelement (17) umfasst, das zwischen dem Drehpositions-Sensor (14) und dem Temperatur-Sensor (7) angeordnet ist und durch das Signalleitungen (13) von dem Drehpositions-Sensor (14) oder dem Temperatur-Sensor (7) dichtend hindurch verlaufen.

2. Sensor-Modul (1) nach Anspruch 1, wobei sich das Dichtelement (17) von einer Außenseite (24) zu einer gegenüberliegenden Außenseite (26) des Halters (6) erstreckt.

3. Sensor-Modul (1) nach Anspruch 1, wobei der Drehpositions-Sensor (14) eine Dicht-Abdeckung (34) umfasst, und die Dicht-Abdeckung (34) das Dichtelement (17) von wenigstens einer Seite her verschließt.

4. Sensor-Modul (1) nach Anspruch 1, wobei das Sensor-Modul (1) des Weiteren einen Haltewinkel (38) zum Halten des Temperatur-Sensors (7) aufweist und der Haltewinkel (38) einen Verbinder-Halter (42) aufweist, mit dem die Verbinder-Schnittstelle (15) in einer Test-Position (46) lösbar an dem Haltewinkel (38) fixiert wird.

5. Sensor-Modul (1) nach Anspruch 4, wobei die Vielzahl von Signalleitungen (13), die den Drehpositions-Sensor (14) und/oder den Temperatur-Sensor (7) mit der Verbinder-Schnittstelle (15) verbinden, in der Test-Position wenigstens teilweise um den Haltewinkel (38) herum gewickelt sind.

6. Sensor-Modul (1) nach Anspruch 4, wobei in einer Einsatz-Position (48) zum Verbinden der Verbinder-Schnittstelle (15) mit einem komplementären Verbinder für den kundenspezifischen Einsatz die Verbinder-Schnittstelle (15) von dem Haltewinkel (38) beabstandet ist.

7. Sensor-Modul (1) nach Anspruch 4, wobei der Haltewinkel (38) ein Durchgangsloch (57) umfasst und sich der Temperatur-Sensor (7) durch das Durchgangsloch (57) hindurch erstreckt.

8. Sensor-Modul (1) nach Anspruch 1, wobei der Temperatur-Sensor (7) wenigstens einen Begrenzungsanschlag (86) umfasst, der von dem Körper des Temperatursensors (7) radial vorsteht und eine Einführungs-Tiefe des Temperatur-Sensors (7) begrenzt.

9. Sensor-Modul (1) nach Anspruch 1, wobei wenigstens eine Spitze (74) des Temperatur-Sensors (7) einen im Wesentlichen rotationssymmetrischen Querschnitt hat.

10. Sensor-Modul (1) nach Anspruch 9, wobei die Spitze (74) des Temperatur-Sensors (7) und der Rest des Temperatur-Sensors (7) Querschnitte umfassen, die sich in Größe oder/und Form voneinander unterscheiden.

11. Sensor-Modul (1) nach Anspruch 10, wobei ein Positionssicherungs-Element (76) zum Fixieren in wenigstens zwei Positionen an dem Haltewinkel (48) eingerichtet ist und in einer ersten Position (78) der wenigstens zwei Positionen die relative Position des Temperatur-Sensors (7) und des Haltewinkels (38) zueinander verschoben werden kann und in der zweiten Position (80) der wenigstens zwei Positionen die relative Position des Temperatur-Sensors (7) und des Haltewinkels (38) zueinander stationär ist.

12. Sensor-Modul (1) nach Anspruch 11, wobei wenigstens in der zweiten Position (80) der wenigstens zwei Positionen wenigstens ein Arretierdom (82) an den Temperatur-Sensor (7) gedrückt wird.

13. Sensor-Modul (1) nach Anspruch 12, wobei der wenigstens eine Arretierdorn (82) und das Positionssicherungs-Element (76) als ein monolithisches Bauteil integral miteinander ausgebildet sind.

14. Sensor-Modul (1) nach Anspruch 12, wobei das Positionssicherungs-Element (76) so eingerichtet ist, dass es den Temperatur-Sensor (7) parallel zu der Bewegung von der ersten Position (78) der wenigstens zwei Positionen zu den anderen Positionen der wenigstens zwei Positionen führt.

15. Motor (2), der eine Nasskammer (8), eine Trockenkammer (9) sowie einen die Nasskammer (8) und die Trockenkammer (9) verbindenden Durchlass (19) umfasst, wobei in dem Motor (2) ein Sensor-Modul (1) nach einem der Ansprüche 1 bis 14 installiert ist, und der Drehpositions-Sensor (14) in der Nass-Kammer (8) installiert ist, der Temperatur-Sensor (7) in der Trocken-Kammer (9) installiert ist und das Dichtelement (17) dichtend in dem Durchlass (19) fixiert ist.

## Revendications

1. Module de capteur (1) à monter dans un moteur (2), le module de capteur (1) comprenant un élément de maintien (6) adapté pour être monté dans une chambre humide (8) du moteur (2) et un capteur de température (7) adapté pour être monté dans une chambre sèche (9) du moteur (2), un capteur de position en rotation (14) monté sur l'élément de maintien (6) et le capteur de température (7) étant écarté de l'élément de maintien (6), le module de capteur comprenant en outre une pluralité de lignes de signaux (13) et une interface de connecteur (15) adaptée pour être branchée à un connecteur correspondant,
dans lequel le capteur de position en rotation (14) et le capteur de température (7) sont connectés via la pluralité de lignes de signaux (13) à l'interface de connecteur (15), et
dans lequel le module de capteur (1) comprend en outre un élément d'étanchéité (17) disposé entre le capteur de position en rotation (14) et le capteur de température (7) et étant pénétré de manière étanche par des lignes de signaux (13) issues d'un du capteur de position en rotation (14) et du capteur de température (7).

2. Le module de capteur (1) selon la revendication 1, dans lequel l'élément d'étanchéité (17) s'étend d'une face latérale (24) à une face latérale opposée (26) de l'élément de maintien (6).

3. Le module de capteur (1) selon la revendication 1, dans lequel le capteur de position en rotation (14) comprend un capot d'étanchéité (34), le capot d'étanchéité (34) fermant l'élément d'étanchéité (17) depuis au moins un côté.

4. Le module de capteur (1) selon la revendication 1, dans lequel le module de capteur (1) comprend en outre une fixation de maintien (38) pour maintenir le capteur de température (7) et dans lequel la fixation de maintien (38) comprend un élément de maintien de connecteur (42) pour fixer de manière amovible l'interface de connecteur (15) à la fixation de maintien (38) dans une position de test (46).

5. Le module de capteur (1) selon la revendication 4, dans lequel au moins dans la position de test (46) la pluralité de lignes de signaux (13) connectant le capteur de position en rotation (14) et/ou le capteur de température (7) à l'interface de connecteur (15) sont au moins partiellement bobinées autour de la fixation de maintien (38).

6. Le module de capteur (1) selon la revendication 4, dans lequel dans une position d'application (48) pour connecter l'interface de connecteur (15) à un connecteur supplémentaire destiné à une application de client, l'interface de connecteur (15) est écartée de la fixation de maintien (38).

7. Le module de capteur (1) selon la revendication 4, dans lequel la fixation de maintien (38) comprend un trou traversant (57) et le capteur de température (7) s'étend à travers le trou traversant (57).

8. Le module de capteur (1) selon la revendication 1, dans lequel le capteur de température (7) comprend au moins une butée de limite (86) se projetant radialement depuis le corps du capteur de température (7) pour limiter une profondeur d'insertion du capteur de température (7).

9. Le module de capteur (1) selon la revendication 1, dans lequel au moins une pointe (74) du capteur de température (7) comprend une section transversale essentiellement symétrique en rotation.

10. Le module de capteur (1) selon la revendication 9, dans lequel la pointe (74) du capteur de température (7) et le reste du capteur de température (7) comprennent des sections transversales, qui sont différentes l'une de l'autre dans au moins une d'une taille et d'une forme.

11. Le module de capteur (1) selon la revendication 10, dans lequel un élément d'assurance de position (76) est adapté pour être fixé dans au moins deux position sur la fixation de maintien (48) et dans lequel sur une première position (78) des au moins deux positions la position relative entre le capteur de température (7) et la fixation de maintien (38) est mobile et dans la deuxième position (80) des au moins deux positions la position relative entre le capteur de température (7) et la fixation de maintien (38) est fixe.

12. Le module de capteur (1) selon la revendication 11, dans lequel au moins dans la deuxième position (80) des au moins deux positions au moins une dent de verrouillage (82) est appuyée contre le capteur de température (7).

13. Le module de capteur (1) selon la revendication 12, dans lequel l'au moins une dent de verrouillage (82) et l'élément d'assurance de position (76) sont constitués intégralement l'un avec l'autre sous forme d'un composant monolithique.

14. Le module de capteur (1) selon la revendication 12, dans lequel l'élément d'assurance de position (76) est adapté pour guider le capteur de température (7) parallèle au mouvement de la première position (78) des au moins deux positions vers les autres positions des au moins deux positions.

15. Moteur (2) comprenant une chambre humide (8), une chambre sèche (9) et un passage (19) connectant la chambre humide (8) et la chambre sèche (9), dans lequel un module de capteur (1) selon l'une quelconque des revendications 1 à 14 est monté dans le moteur (2), le capteur de position en rotation (14) étant monté dans la chambre humide (8) et le capteur de température (7) étant monté dans la chambre sèche (9) et dans lequel l'élément d'étanchéité (17) est fixé de manière étanche dans le passage (19).
